# EUROPEAN PATENT APPLICATION

(11) **EP 4 566 800 A1**
(43) Date of publication of application: **11.06.2025**
(21) Application number: 23849235.9
(22) Date of filing: 25.07.2023
(51) Int. Cl.: B29C 70/34

(54) **MODIFIED CONTINUOUS CARBON FIBER REINFORCED POLYETHER ETHER KETONE COMPOSITE MATERIAL LAMINATED PLATE AND PREPARATION METHOD THEREFOR**

(30) Priority: 04.08.2022 CN 202210932412
(71) Applicant: Zhongfu Shenying (Shanghai) Technology Co., Ltd., Shanghai 200120 (CN); China National Building Material Group Co., Ltd., Beijing 100036 (CN)
(72) Inventor: GUO, Pengzong, Shanghai 200120 (CN); PAN, Tong, Shanghai 200120 (CN); WANG, Jiahuan, Shanghai 200120 (CN); WANG, Tong, Shanghai 200120 (CN)
(74) Representative: Michalski Hüttermann & Partner Patentanwälte mbB
(86) International application number: PCT/CN2023/109050
(87) International publication number: WO 2024/027527

(57) **Abstract**

A modified continuous carbon fiber reinforced polyetheretherketone composite laminate and a preparation method thereof are disclosed. The method including: performing desizing and activation on continuous carbon fibers, and performing surface treatment on the continuous carbon fibers by using graphene oxide nanoparticles, then compounding the surface-treated continuous carbon fibers with polyetheretherketone powder by means of melt impregnation method, and finally preparing the modified continuous carbon fiber reinforced polyetheretherketone composite laminate by using compression molding process.

## Description

The present disclosure is based on and claims the priority to Chinese patent application No. 202210932412.3, filed on August 4, 2022, entitled "Modified Continuous Carbon Fiber Reinforced Polyetheretherketone Composite Laminate and Preparation Method Thereof ", the entire contents of which are incorporated herein by reference.

### Technical Field

The present disclosure belongs to the technical field of advanced composite materials, and relates to a modified continuous carbon fiber reinforced polyetheretherketone composite laminate and a preparation method thereof.

### Background

In recent years, with the increasing demand for carbon fiber (CF) reinforced composite materials in engineering structural fields such as aerospace and automotive, researchers have invested a lot of effort in the research and development of CF reinforced composite materials. Although CF reinforced composite materials have high stiffness, they are brittle and have low fracture toughness. This problem can be effectively solved by using a thermoplastic resin matrix. Where, polyetheretherketone (PEEK) has attracted much attention due to its excellent semi-crystalline matrix properties, dimensional stability, physical and chemical properties, and processability. Carbon fiber/polyetheretherketone (CF/PEEK) composite materials have good melting point fluidity and thermal stability beyond the melting point, and their excellent processability allows them to be prepared by various methods. Therefore, the application of CF/PEEK in the industrial field is becoming increasingly widespread.

In the CF/PEEK composite materials, the carbon fibers commonly used are short-cut carbon fiber and long-cut carbon fiber. Short-cut carbon fiber is commonly used as a mixture for plastics, resins, cement, etc., which can improve mechanical properties, wear resistance, conductivity, and heat resistance by mixing it into the matrix. This is a relatively simple and low-end application method. Long-cut carbon fiber is currently the most widely used material in high and mid-grade application. Long-cut carbon fiber bundles are composed of thousands of monofilaments, which are then cut into corresponding lengths according to demands. They are mainly used in CFRP composite materials etc., and their application fields include aircraft/aerospace equipment, sports equipment, and industrial equipment parts, etc.. Compared with short-cut carbon fibers and long-cut carbon fibers, continuous carbon fibers have better comprehensive performance and stronger stability, making them excellent experimental materials in cutting-edge fields. However, due to the difficulty in preparing continuous carbon fibers , it is difficult to achieve mass production.

Although CF/PEEK composite materials have good application prospects, there are problems such as relatively high manufacturing costs, insufficient continuous length of CF, influence of fiber surface treatment on infiltration effect, and inability to mass industrial production. This requires promoting in-depth research on Continuous Carbon Fiber (CCF)/PEEK composite materials, and exploring their potential for high performance and large-scale processing. The preparation process of CCF/PEEK mainly includes carbon fiber pretreatment and preparation of composite materials. Its performance depends largely on the interface bonding between the matrix and the reinforcing fibers. Therefore, achieving good wettability between the resin matrix and the reinforcing fibers is a prerequisite for achieving good interface bonding. However, PEEK has a high melting point and high melt viscosity, and the surface of untreated CCF is smooth, resulting in poor interfacial bonding performance between the two.

### Summary

The following is an overview of the subject matter described in detail in the present disclosure. This summary is not intended to limit the scope of the claims.

A first aspect of the present disclosure provides a preparation method of a modified continuous carbon fiber reinforced polyetheretherketone composite laminate by compositing the continuous carbon fibers surface-modified with nanoscale graphene oxide particles (GO) with polyetheretherketone powder, preparing unidirectional prepreg tape of continuous carbon fiber reinforced polyetheretherketone composite material by melt impregnation method, and preparing continuous carbon fiber reinforced polyetheretherketone composite laminate by compression molding process, the method comprising:
continuous carbon fibers surface treatment: immersing desizing-activated continuous carbon fibers in a dichloromethane dispersion of 0.1-1.0wt% graphene oxide nanoparticles; after impregnation, drying to obtain surface treated continuous carbon fibers;
preparation of unidirectional prepreg tape by melt impregnation method: by using electrostatic fluidized bed technology, dispersing the surface treated continuous carbon fibers, and surfaces of the surface treated continuous carbon fibers adsorbing polyetheretherketone powder through electrostatic interaction; then, placing the continuous carbon fibers adsorbed with polyetheretherketone in a melting furnace, hot pressing and flattening online to obtain a unidirectional prepreg tape of continuous carbon fiber reinforced polyetheretherketone composite material;
preparation of laminate by compression molding process: by using compression molding process, hot pressing the unidirectional prepreg tape of continuous carbon fiber reinforced polyetheretherketone composite material, to prepare a modified continuous carbon fiber reinforced polyetheretherketone composite laminate.

In some embodiments of the present disclosure, wherein in the continuous carbon fibers surface treatment, the continuous carbon fibers are T800 grade continuous carbon fibers, T700 grade continuous carbon fibers, or T300 grade continuous carbon fibers.

In some embodiments of the present disclosure, wherein in the continuous carbon fibers surface treatment, immersion time is 1~1.5 hours.

In some embodiments of the present disclosure, wherein in the continuous carbon fibers surface treatment, a desizing activation method of the continuous carbon fibers is: immersing the continuous carbon fibers in acetone, heating them in a water bath to 70°C, condensing and refluxing for 12 hours; then washing the continuous carbon fibers for 5 times with deionized water, and drying in a vacuum drying oven at 100°C for 12 hours; and then placing desizing continuous carbon fibers in 40wt% concentrated nitric acid and treating at 60°C for 2 hours; after treatment, washing the continuous carbon fibers with deionized water and drying.

In some embodiments of the present disclosure, wherein in the continuous carbon fibers surface treatment, a drying temperature is 80°C and a drying time is 72 hours.

In some embodiments of the present disclosure, wherein in the preparation of unidirectional prepreg tape by melt impregnation method, an advancing speed of the continuous carbon fibers is 5cm/s, a width of a continuous carbon fiber bundle is 5cm, a residence time in the electrostatic fluidized bed is 3s, an air pressure in the electrostatic fluidized bed is 650KPa, a temperature in the melting furnace is 400°C, and a residence time of the continuous carbon fiber bundle in the melting furnace is 15min.

In some embodiments of the present disclosure, wherein in the preparation of laminate by compression molding process, conditions for hot pressing molding are: raising temperature to 300°C, applying pressure to 2~3MPa, and keeping the temperature for 30 minutes; then raising the temperature to 380°C, increasing the pressure to 4~6 MPa, and keeping the temperature for 60 minutes; after heat preservation is completed, maintaining the pressure, and reducing the temperature at a rate of 1~3°C/min until the temperature reaches room temperature, and then demolding, and releasing the pressure when the temperature drops below 100°C.

A second aspect of the present disclosure provides a modified continuous carbon fiber reinforced polyetheretherketone composite laminate prepared by the method described above.

Compared with the prior art, the present disclosure has the following advantages:
(1) In the present disclosure, continuous carbon fibers are used as the raw material, and continuous carbon fibers have better comprehensive mechanical properties and stronger stability compared to short-cut carbon fibers and long-cut carbon fibers.
(2) In the present disclosure, CCF/PEEK composite materials with excellent mechanical properties are prepared by surface treatment of continuous carbon fibers with nanoscale graphene oxide particles, combined with melt impregnation method and compression molding processes.

Other aspects will be understood after reading and understanding the detailed description.

### Brief Description of the Drawings

The accompanying drawings incorporated into the specification and constituting a part of the specification illustrate the embodiments of the present disclosure, and are used together with the description to explain the principles of the present disclosure. In these accompanying drawings, similar reference numerals represent similar elements. The accompanying drawings in the following description illustrate some rather than all of the embodiments of the present disclosure. Those skilled in the art may obtain other accompanying drawings based on these accompanying drawings without creative efforts.

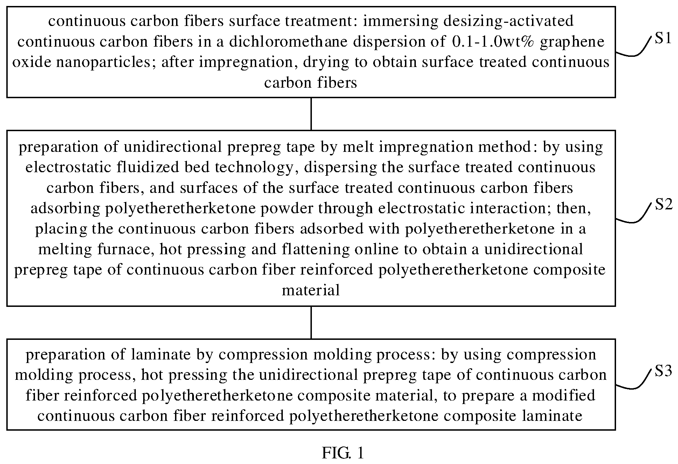

FIG. 1 is a flowchart of a preparation method of a modified continuous carbon fiber reinforced polyetheretherketone composite laminate according to an exemplary embodiment.

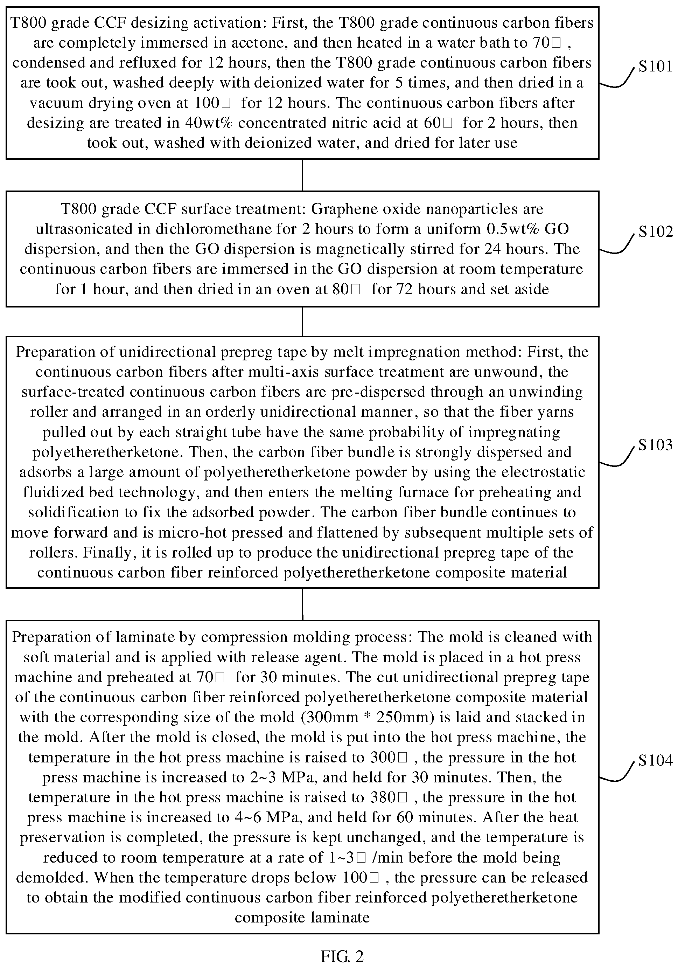

FIG. 2 is a flowchart of the preparation method of the modified continuous carbon fiber reinforced polyetheretherketone composite laminates according to an exemplary embodiment.

### Detailed Description

The technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by those skilled in the art based on the embodiments of the present disclosure without creative efforts should fall within the protection scope of the present disclosure. It should be noted that the embodiments in the present disclosure and features in the embodiments may be combined with each other in a non-conflicting manner.

### Example 1

S101. T800 grade CCF desizing activation: First, the T800 grade continuous carbon fibers are completely immersed in acetone, and then heated in a water bath to 70°C, condensed and refluxed for 12 hours, then the T800 grade continuous carbon fibers are took out, washed deeply with deionized water for 5 times, and then dried in a vacuum drying oven at 100°C for 12 hours. The continuous carbon fibers after desizing are treated in 40wt% concentrated nitric acid at 60°C for 2 hours, then took out, washed with deionized water, and dried for later use.

S102. T800 grade CCF surface treatment: Graphene oxide nanoparticles are ultrasonicated in dichloromethane for 2 hours to form a uniform 0.5wt% GO dispersion, and then the GO dispersion is magnetically stirred for 24 hours. The continuous carbon fibers are immersed in the GO dispersion at room temperature for 1 hour, and then dried in an oven at 80°C for 72 hours and set aside.

S103. Preparation of unidirectional prepreg tape by melt impregnation method: First, the continuous carbon fibers after multi-axis surface treatment are unwound, the surface-treated continuous carbon fibers are pre-dispersed through an unwinding roller and arranged in an orderly unidirectional manner, so that the fiber yarns pulled out by each straight tube have the same probability of impregnating polyetheretherketone. Then, the carbon fiber bundle is strongly dispersed and adsorbs a large amount of polyetheretherketone powder by using the electrostatic fluidized bed technology, and then enters the melting furnace for preheating and solidification to fix the adsorbed powder. The carbon fiber bundle continues to move forward and is micro-hot pressed and flattened by subsequent multiple sets of rollers. Finally, it is rolled up to produce the unidirectional prepreg tape of the continuous carbon fiber reinforced polyetheretherketone composite material. The specific process parameters are shown in Table 1.

**Table 1 Prepreg process parameters**

| speed of fiber bundle (cm/s) | width of fiber bundle /cm | residence time of fiber bundle in electrostatic fluidized bed /s | air pressure in electrostatic fluidized bed /kPa | temperature in melting furnace /°C | residence time of fiber bundle in melting furnace /min |
|---|---|---|---|---|---|
| 5.0 | 5.0 | 3.0 | 650.0 | 400 °C | 15.0 |

S104. Preparation of laminate by compression molding process: The mold is cleaned with soft material and is applied with release agent. The mold is placed in a hot press machine and preheated at 70°C for 30 minutes. The cut unidirectional prepreg tape of the continuous carbon fiber reinforced polyetheretherketone composite material with the corresponding size of the mold (300mm * 250mm) is laid and stacked in the mold. After the mold is closed, the mold is put into the hot press machine, the temperature in the hot press machine is raised to 300°C, the pressure in the hot press machine is increased to 2~3 MPa, and held for 30 minutes. Then, the temperature in the hot press machine is raised to 380°C, the pressure in the hot press machine is increased to 4~6 MPa, and held for 60 minutes. After the heat preservation is completed, the pressure is kept unchanged, and the temperature is reduced to room temperature at a rate of 1~3°C/min before the mold being demolded. When the temperature drops below 100°C, the pressure can be released to obtain the modified continuous carbon fiber reinforced polyetheretherketone composite laminate.

The interlaminar shear strength test on the modified continuous carbon fiber reinforced polyetheretherketone composite laminate is carried out according to the ASTM D2344 standard, and the flexural performance test is carried out according to the ASTM D7264 standard. The interlaminar shear strength (ILSS), 0° flexural strength (0FS), and 0° flexural modulus (0FM) of the modified continuous carbon fiber reinforced polyetheretherketone composite laminate prepared in Example 1 at 23°C/50% RH are 115 MPa, 1950 MPa, and 109 GPa, respectively.

### Example 2

This example is basically the same as Example 1, with the only difference being that the concentration of GO particles in the GO dispersion is 0.1wt%. The ILSS, 0FS, and 0FM of the modified continuous carbon fiber reinforced polyetheretherketone composite laminate prepared in Example 2 at 23°C/50% RH are 103MPa, 1845MPa, and 118GPa, respectively.

### Example 3

This example is basically the same as Example 1, with the only difference being that the concentration of GO particles in the GO dispersion is 0.3wt%. The ILSS, 0FS, and 0FM of the modified continuous carbon fiber reinforced polyetheretherketone composite laminate prepared in Example 3 at 23°C/50% RH are 110 MPa, 1912 MPa, and 115 GPa, respectively.

### Example 4

This example is basically the same as Example 1, with the only difference being that the concentration of GO particles in the GO dispersion is 0.8 wt%. The ILSS, 0FS, and 0FM of the modified continuous carbon fiber reinforced polyetheretherketone composite laminate prepared in Example 4 at 23°C/50% RH are 104 MPa, 1934 MPa, and 106 GPa, respectively.

### Example 5

This example is basically the same as Example 1, with the only difference being that the concentration of GO particles in the GO dispersion is 1.0 wt%. The ILSS, 0FS, and 0FM of the modified continuous carbon fiber reinforced polyetheretherketone composite laminate prepared in Example 5 at 23°C/50% RH are 96 MPa, 1871 MPa, and 116 GPa, respectively.

### Comparative Example 1

This comparative example is basically the same as Example 1, with the only difference being that the GO particle processing is not performed. The ILSS, 0FS, and 0FM of the continuous carbon fiber reinforced polyetheretherketone composite laminate prepared in Comparative Example 1 at 23°C/50% RH are 100MPa, 1830MPa, and 125GPa, respectively.

### Comparative Example 2

This comparative example is basically the same as Example 1, with the only difference being that the T800 grade continuous carbon fiber is changed to T700 grade continuous carbon fiber, and the concentration of GO particles in the GO dispersion for carbon fiber surface treatment is 0.5wt%. The ILSS, 0FS, and 0FM of the modified continuous carbon fiber reinforced polyetheretherketone composite laminate prepared in Comparative Example 2 at 23°C/50% RH are 97MPa, 1753MPa, and 86GPa, respectively.

### Comparative Example 3

This comparative example is basically the same as Example 1, with the only difference being that the T800 grade continuous carbon fiber is changed to T300 grade continuous carbon fiber, and the concentration of GO particles in the GO dispersion for carbon fiber surface treatment is 0.5wt%. The ILSS, 0FS, and 0FM of the modified continuous carbon fiber reinforced polyetheretherketone composite laminate prepared in Comparative Example 3 at 23°C/50% RH are 72MPa, 553MPa, and 27GPa, respectively.

**Table 2 Performance data of continuous carbon fiber reinforced polyetheretherketone composite laminates of Examples and Comparative Examples**

| | CCF category | GO particle content | ILSS/MPa | 0FS/MPa | 0FM/GPa |
|---|---|---|---|---|---|
| Example 1 | T800-SYT55G | 0.5wt% | 115 | 1950 | 109 |
| Example 2 | T800-SYT55G | 0.1wt% | 103 | 1845 | 118 |
| Example 3 | T800-SYT55G | 0.3wt% | 110 | 1912 | 115 |
| Example 4 | T800-SYT55G | 0.8wt% | 104 | 1934 | 106 |
| Example 5 | T800-SYT55G | 1wt% | 96 | 1871 | 116 |
| Comparative Example 1 | T800-SYT55G | 0 | 100 | 1830 | 125 |
| Comparative Example 2 | T700-SYT49S | 0.5wt% | 97 | 1753 | 86 |
| Comparative Example 3 | T300-SYT35 | 0.5wt% | 72 | 553 | 27 |

It can be seen from Table 2 that for the same type of CCF, the CCF/PEEK laminate produced with a concentration of GO particles of 0.5 wt% in the GO dispersion for carbon fibre surface treatment has superior mechanical properties, the interlaminar shear strength is as high as 115MPa, the 0° flexural strength is as high as 1950MPa, and the 0° flexural modulus is as high as 109Gpa. Compared with the T800 grade unmodified CCF/PEEK composite material, the interlaminar shear strength and flexural strength are increased by 15% and 6.6% respectively, and the flexural modulus is decreased by 12.8%. This indicates that the modification of continuous carbon fibers by nanoscale GO particles effectively improves the interfacial interaction between fibers and resin matrix. Comparing the examples and comparative examples using T800 grade CCF, T700 grade CCF, and T300 grade CCF as raw materials respectively, it can be seen that the mechanical properties of T700 grade CCF/PEEK and T300 grade CCF/PEEK composite laminates are lower than those of T800 grade CCF/PEEK composite laminates prepared under the same preparation process.

Each embodiment or implementation in this specification is described in a progressive manner, and the differences between each embodiment and other embodiments are emphasized, and the same and similar parts between the embodiments can be referred to each other.

In the description of this specification, the description with reference to terms such as "an embodiment", "an exemplary embodiment", "some implementations", "an illustrative implementation", and "an example" means that the specific feature, structure, material, or characteristic described in combination with the implementation(s) or example(s) is included in at least one implementation or example of the present disclosure.

In this specification, the schematic expression of the above terms does not necessarily refer to the same implementation or example. Moreover, the described specific feature, structure, material or characteristic may be combined in an appropriate manner in any one or more implementations or examples.

Finally, it should be noted that the above embodiments are merely intended to explain the technical solutions of the present disclosure, rather than to limit the present disclosure. Although the present disclosure is described in detail with reference to the above embodiments, those skilled in the art should understand that they may still modify the technical solutions described in the above embodiments, or make equivalent substitutions of some or all of the technical features recorded therein, without deviating the essence of the corresponding technical solutions from the scope of the technical solutions of the embodiments of the present disclosure.

### Industrial Applicability

In the modified continuous carbon fiber reinforced polyetheretherketone composite laminate and the preparation method thereof provided in the present disclosure, CCF/PEEK composite materials with excellent mechanical properties are prepared by surface treatment of continuous carbon fibers with nanoscale graphene oxide particles, combined with melt impregnation method and compression molding processes.

## Claims

1. A preparation method of a modified continuous carbon fiber reinforced polyetheretherketone composite laminate, **characterized by**, comprising:
continuous carbon fibers surface treatment: immersing desizing-activated continuous carbon fibers in a dichloromethane dispersion of 0.1-1.0wt% graphene oxide nanoparticles; after impregnation, drying to obtain surface treated continuous carbon fibers (S1);
preparation of unidirectional prepreg tape by melt impregnation method: by using electrostatic fluidized bed technology, dispersing the surface treated continuous carbon fibers, and surfaces of the surface treated continuous carbon fibers adsorbing polyetheretherketone powder through electrostatic interaction; then, placing the continuous carbon fibers adsorbed with polyetheretherketone in a melting furnace, hot pressing and flattening online to obtain a unidirectional prepreg tape of continuous carbon fiber reinforced polyetheretherketone composite material (S2);
preparation of laminate by compression molding process: by using compression molding process, hot pressing the unidirectional prepreg tape of continuous carbon fiber reinforced polyetheretherketone composite material, to prepare a modified continuous carbon fiber reinforced polyetheretherketone composite laminate (S3).

2. The preparation method according to claim 1, wherein in the continuous carbon fibers surface treatment, the continuous carbon fibers are T800 grade continuous carbon fibers, T700 grade continuous carbon fibers, or T300 grade continuous carbon fibers.

3. The preparation method according to any one of claims 1 to 2, wherein in the continuous carbon fibers surface treatment, an impregnation time is 1~1.5 hours.

4. The preparation method according to any one of claims 1 to 3, wherein in the continuous carbon fibers surface treatment, a desizing activation method of the continuous carbon fibers is: immersing the continuous carbon fibers in acetone, heating them in a water bath to 70°C, condensing and refluxing for 12 hours; then washing the continuous carbon fibers for 5 times with deionized water, and drying in a vacuum drying oven at 100°C for 12 hours; and then placing desizing continuous carbon fibers in 40wt% concentrated nitric acid and treating at 60°C for 2 hours; after treatment, washing the continuous carbon fibers with deionized water and drying.

5. The preparation method according to any one of claims 1 to 4, wherein in the continuous carbon fibers surface treatment, a drying temperature is 80°C and a drying time is 72 hours.

6. The preparation method according to any one of claims 1 to 5, wherein in the preparation of unidirectional prepreg tape by melt impregnation method, an advancing speed of the continuous carbon fibers is 5cm/s, a width of a continuous carbon fiber bundle is 5cm, a residence time in the electrostatic fluidized bed is 3s, an air pressure in the electrostatic fluidized bed is 650KPa, a temperature in the melting furnace is 400°C, and a residence time of the continuous carbon fiber bundle in the melting furnace is 15min.

7. The preparation method according to any one of claims 1 to 6, wherein in the preparation of laminate by compression molding process, conditions for hot pressing molding are: raising temperature to 300°C, applying pressure to 2~3MPa, and keeping the temperature for 30 minutes; then raising the temperature to 380°C, increasing the pressure to 4~6 MPa, and keeping the temperature for 60 minutes; after heat preservation is completed, maintaining the pressure, and reducing the temperature at a rate of 1~3°C/min until the temperature reaches room temperature, and then demolding, and releasing the pressure when the temperature drops below 100°C.

8. A modified continuous carbon fiber reinforced polyetheretherketone composite laminate prepared by the method according to any one of claims 1 to 7.
